# EUROPEAN PATENT APPLICATION

(11) **EP 4 618 026 A1**
(43) Date of publication of application: **17.09.2025**
(21) Application number: 23893360.0
(22) Date of filing: 12.09.2023
(51) Int. Cl.: G06T 17/00, G06T 7/55, G06V 20/70

(54) **METHOD AND APPARATUS FOR THREE-DIMENSIONAL TWIN**

(30) Priority: 21.11.2022 CN 202211457491; 15.12.2022 CN 202211619995
(71) Applicant: Huawei Cloud Computing Technologies Co., Ltd., Guiyang, Guizhou 550025 (CN)
(72) Inventor: SHAN, Weihua, Guiyang, Guizhou 550025 (CN); XIONG, Lin, Guiyang, Guizhou 550025 (CN); YANG, Jianping, Guiyang, Guizhou 550025 (CN)
(74) Representative: Goddar, Heinz J.
(86) International application number: PCT/CN2023/118288
(87) International publication number: WO 2024/109267

(57) **Abstract**

Embodiments of this application disclose a three-dimensional twinning method, to improve a modeling effect of a three-dimensional twin model. The method in embodiments of this application includes: obtaining a first multi-angle image of a first target scene; recognizing, based on the first multi-angle image, a plurality of target objects included in the first target scene, to obtain semantic features of the plurality of target objects; obtaining, from a model library, a plurality of first three-dimensional models that match the semantic features of the plurality of target objects, where the plurality of first three-dimensional models carry physical parameters of the plurality of target objects; and generating, by using the plurality of first three-dimensional models, a first three-dimensional twin model corresponding to the first target scene.

## Description

This application claims priorities to Chinese Patent Application No. 202211457491.3, filed with the China National Intellectual Property Administration on November 21, 2022 and entitled "THREE-DIMENSIONAL TWINNING METHOD AND APPARATUS", and to Chinese Patent Application No. 202211619995.0, filed with the China National Intellectual Property Administration on December 15, 2022 and entitled "THREE-DIMENSIONAL TWINNING METHOD AND APPARATUS", both of which are incorporated herein by reference in their entireties.

### TECHNICAL FIELD

Embodiments of this application relate to the computer field, and in particular, to a three-dimensional twinning method and apparatus.

### BACKGROUND

A three-dimensional twin technology is a hot topic in the fields of computer graphics and computer vision, and mainly focuses on how to restore three-dimensional information of an object by using a two-dimensional projection or image, to generate a three-dimensional twin model. The three-dimensional twin technology is widely applied to the fields of gaming, movies, surveying and mapping, positioning, navigation, robots, autonomous driving, virtual reality (virtual reality, VR), augmented reality (augmented reality, AR), industrial manufacturing, and the like.

In a current three-dimensional twin technology, two-dimensional image data information of an object is mainly obtained via an instrument, and then the obtained data information is analyzed and processed. Contour information of the object in a real environment is directly twinned by using a three-dimensional twin theory and the obtained data information. In this way, a three-dimensional twin model is obtained.

In a current three-dimensional twin solution, refined expression of physical semantics of each component cannot be implemented in a three-dimensional model reconstructed or restored based on images. Consequently, a modeling effect of the three-dimensional twin model is poor, and a service requirement cannot be met.

### SUMMARY

Embodiments of this application provide a three-dimensional twinning method and apparatus, to improve a modeling effect of a three-dimensional twin model.

According to a first aspect, an embodiment of this application provides a three-dimensional twinning method. The method may be performed by a cloud server, or may be performed by a component of a cloud server, for example, a processor, a chip, or a chip system of the cloud server, or may be implemented by a logical module or software that can implement all or some functions of a cloud server. The method according to the first aspect includes: The cloud server obtains a first multi-angle image of a first target scene. The cloud server recognizes, based on the first multi-angle image, a plurality of target objects included in the first target scene, to obtain semantic features of the plurality of target objects. The cloud server obtains, from a model library, a plurality of first three-dimensional models that match the semantic features of the plurality of target objects, where the plurality of first three-dimensional models carry physical parameters of the plurality of target objects. The cloud server generates, by using the plurality of first three-dimensional models, a first three-dimensional twin model corresponding to the first target scene.

In this embodiment of this application, the cloud server can obtain, through matching, the three-dimensional models of the plurality of target objects from the model library based on the multi-angle image of the scene, and generate the three-dimensional twin model of the target scene by using the matched three-dimensional model in the model library. Because the three-dimensional model in the model library is configured with the physical parameter, the three-dimensional twin model generated based on the three-dimensional model in the model library carries physical semantics of the target scene. In this way, a modeling effect of the three-dimensional twin model is improved.

In a possible implementation, the cloud server obtains a second multi-angle image of the first three-dimensional twin model. The cloud server adjusts, based on a difference between the first multi-angle image and the second multi-angle image, the first three-dimensional twin model corresponding to the first target scene. When the difference between the second multi-angle image and the first multi-angle image is less than an error threshold, the cloud server outputs the first three-dimensional twin model corresponding to the first target scene.

In this embodiment of this application, the cloud server obtains the multi-angle image of the generated three-dimensional twin model, and performs difference comparison between the multi-angle image of the generated three-dimensional twin model and the multi-angle image of the real target scene based on the multi-angle image of the three-dimensional twin model, to correct the three-dimensional twin model. In this way, modeling accuracy of the three-dimensional twin model is improved.

In a possible implementation, the cloud server adjusts a model parameter of the first three-dimensional twin model based on a second target scene, to obtain a second three-dimensional twin model corresponding to the second target scene, where the second target scene includes a plurality of target objects, and the second target scene and the first target scene have different environments. The model parameter includes physical parameters such as a lighting parameter and a material parameter.

In this embodiment of this application, the cloud server can perform model parameter adjustment on the modeled three-dimensional twin model, to obtain the three-dimensional twin model of the another target scene without remodeling. In this way, modeling efficiency of a three-dimensional twin model of a similar scene is improved.

In a possible implementation, in a process in which the cloud server recognizes, based on the first multi-angle image, the plurality of target objects included in the first target scene, the cloud server performs segmentation based on the first multi-angle image, to obtain a plurality of images obtained through segmentation; and recognizes the plurality of images obtained through segmentation, determines the plurality of target objects, and extracts the semantic features of the target objects.

In this embodiment of this application, when recognizing the target object based on the multi-angle image of the target scene, the cloud server may directly perform segmentation on the multi-angle image of the target scene, and then recognize the target object based on the segmented multi-angle image. In this way, implementability of the solution is improved.

In a possible implementation, in a process in which the cloud server recognizes, based on the first multi-angle image, the plurality of target objects included in the first target scene, the cloud server generates a third three-dimensional twin model based on the first multi-angle image; and performs segmentation on the third three-dimensional twin model, to obtain the plurality of target objects, and extracts the semantic features of the target objects.

In this embodiment of this application, when recognizing the target object based on the multi-angle image of the target scene, the cloud server may alternatively directly generate the three-dimensional twin model based on the multi-angle image of the target scene, and then perform segmentation on the three-dimensional twin model, to obtain the target object. In this way, implementability of the solution is improved.

In a possible implementation, after determining, from the model library, the three-dimensional model that matches the semantic feature of the target object, the cloud server may perform parameter adjustment on the three-dimensional model, so that the three-dimensional model better matches the three-dimensional model of the target object, and generate, based on the three-dimensional model obtained by performing parameter adjustment, the first three-dimensional twin model corresponding to the first target scene.

In this embodiment of this application, the cloud server can perform parameter adjustment on the three-dimensional model that is determined from the model library and that matches the semantic feature of the target object. In this way, accuracy of the model is improved, and the modeling effect of the three-dimensional twin model is further improved.

In a possible implementation, when the target object does not match a three-dimensional model in the model library, a second three-dimensional model is generated based on the target object, and the second three-dimensional model is stored in the model library.

In this embodiment of this application, when determining that the three-dimensional model of the target object does not match the three-dimensional model in the model library, the cloud server can newly add a three-dimensional model to the model library based on the three-dimensional model of the target object. In this way, a quantity of three-dimensional models in the model library is increased, and the modeling effect of the three-dimensional twin model is further improved.

In a possible implementation, the physical parameter includes one or more of the following: mass, friction coefficient, material, hardness, elastic coefficient, viscosity coefficient, and shape.

In this embodiment of this application, the three-dimensional model in the model library includes a plurality of physical parameters, so that the modeling effect of the three-dimensional twin model is improved, and a service application scope of the three-dimensional twin model is extended.

According to a second aspect, an embodiment of this application provides a three-dimensional twinning apparatus. The apparatus includes a transceiver unit and a processing unit. The transceiver unit is configured to obtain a first multi-angle image of a first target scene. The processing unit is configured to recognize, based on the first multi-angle image, a plurality of target objects included in the first target scene, to obtain semantic features of the plurality of target objects. The processing unit is further configured to obtain, from a model library, a plurality of first three-dimensional models that match the semantic features of the plurality of target objects, where the plurality of first three-dimensional models carry physical parameters of the plurality of target objects. The processing unit is further configured to generate, by using the plurality of first three-dimensional models, a first three-dimensional twin model corresponding to the first target scene.

In a possible implementation, the processing unit is further configured to: obtain a second multi-angle image of the first three-dimensional twin model; and adjust, based on a difference between the first multi-angle image and the second multi-angle image, the first three-dimensional twin model corresponding to the first target scene.

In a possible implementation, the processing unit is further configured to adjust a model parameter of the first three-dimensional twin model based on a second target scene, to obtain a second three-dimensional twin model corresponding to the second target scene, where the second target scene includes the plurality of target objects, and the second target scene and the first target scene have different environments.

In a possible implementation, the processing unit is specifically configured to: perform segmentation based on the first multi-angle image, to obtain a plurality of images obtained through segmentation; and recognize the plurality of images obtained through segmentation, and determine the plurality of target objects.

In a possible implementation, the processing unit is specifically configured to: generate a third three-dimensional twin model based on the first multi-angle image; and perform segmentation on the third three-dimensional twin model, to obtain the plurality of target objects.

In a possible implementation, the processing unit is further configured to: when the target object does not match a three-dimensional model in the model library, generate a second three-dimensional model based on the target object; and store the second three-dimensional model in the model library.

In a possible implementation, the physical parameter includes one or more of the following: mass, friction coefficient, material, hardness, elastic coefficient, viscosity coefficient, and shape.

According to a third aspect, an embodiment of this application provides a computing device cluster. The computing device cluster includes one or more computing devices. The computing device includes a processor, the processor is coupled to a memory, and the processor is configured to store instructions. When the instructions are executed by the processor, the computing device cluster is caused to perform the method according to any one of the first aspect or the possible implementations of the first aspect.

According to a fourth aspect, an embodiment of this application provides a computer-readable storage medium. The computer-readable storage medium stores instructions. When the instructions are executed, a computer is caused to perform the method according to any one of the first aspect or the possible implementations of the first aspect.

According to a fifth aspect, an embodiment of this application provides a computer program product. The computer program product includes instructions. When the instructions are executed, a computer is caused to perform the method according to any one of the first aspect or the possible implementations of the first aspect.

It may be understood that, for beneficial effects that can be achieved by any one of the three-dimensional twinning apparatus, the computing device cluster, the computer-readable medium, the computer program product, or the like provided above, refer to beneficial effects in the corresponding method. Details are not described herein again.

### BRIEF DESCRIPTION OF DRAWINGS

FIG. 1 is a diagram of a system architecture of a three-dimensional twin system according to an embodiment of this application;
FIG. 2 is a schematic flowchart of a three-dimensional twinning method according to an embodiment of this application;
FIG. 3 is a schematic flowchart of another three-dimensional twinning method according to an embodiment of this application;
FIG. 4 is a schematic flowchart of another three-dimensional twinning method according to an embodiment of this application;
FIG. 5 is a diagram of creating a model library according to an embodiment of this application;
FIG. 6 is a diagram of a structure of a three-dimensional twinning apparatus according to an embodiment of this application;
FIG. 7 is a diagram of a structure of a computing device according to an embodiment of this application;
FIG. 8 is a diagram of a structure of a computing device cluster according to an embodiment of this application; and
FIG. 9 is a diagram of a structure of another computing device cluster according to an embodiment of this application.

### DESCRIPTION OF EMBODIMENTS

Embodiments of this application provide a three-dimensional twinning method and apparatus, to improve a modeling effect of a three-dimensional twin model.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the word such as "example" or "for example" is used to indicate giving an example, an illustration, or a description. Any embodiment or design scheme described as an "example" or "for example" in embodiments of this application should not be explained as being more preferred or having more advantages than another embodiment or design scheme. To be precise, use of the word such as " example " or "for example" is intended to present a relative concept in a specific manner.

First, some terms in embodiments of this application are described, to facilitate understanding by a person skilled in the art.

Three-dimensional reconstruction (3D reconstruction), also referred to as three-dimensional twinning, is a mathematical process and a computer technology of restoring three-dimensional information of an object by using a two-dimensional projection or image.

A point cloud (point cloud) is a dataset of points in a coordinate system. The point cloud includes abundant information, including three-dimensional coordinates X, Y, Z, a color, a classification value, an intensity value, time, and the like.

A mesh (mesh) is a polygon mesh including a triangle. Polygons and triangle meshes are widely used in graphics and modeling to simulate surfaces of complex objects, such as buildings, vehicles, and human bodies. Any polygon mesh can be converted into a triangle mesh.

A depth (depth) map includes a red, green, blue RGB three-channel image and a depth map. Each pixel in the depth map indicates a distance from an object to a camera imaging plane.

A voxel (voxel) is a point with a size or a small block in three-dimensional space, and may be similar to a pixel in two-dimensional space.

With reference to the accompanying drawings, the following describes a three-dimensional twinning method and apparatus provided in embodiments of this application.

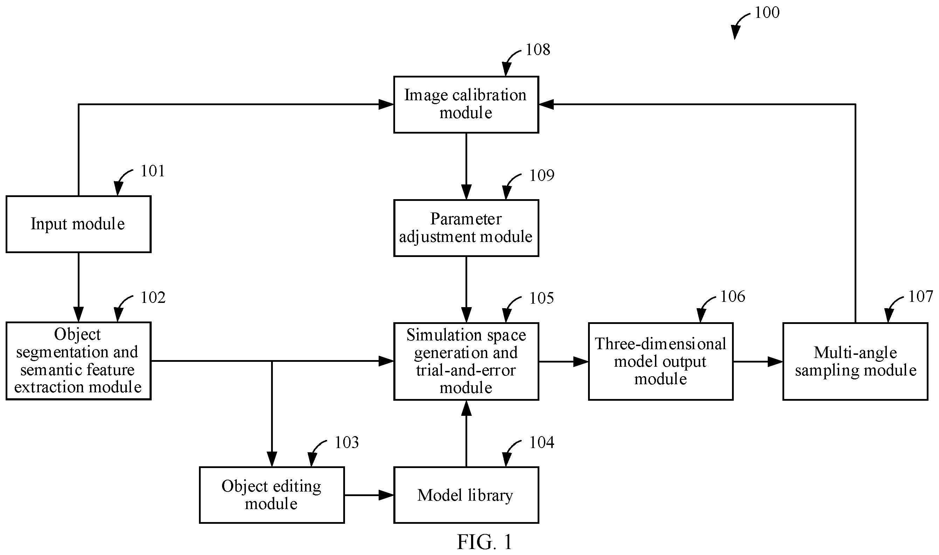

FIG. 1 is a diagram of a system architecture to which a three-dimensional twinning method is applied according to an embodiment of this application. In an example shown in FIG. 1, a three-dimensional twin system 100 includes: an input module 101, an object segmentation and semantic feature extraction module 102, an object editing module 103, a model library 104, a simulation space generation and trial-and-error module 105, a three-dimensional model output module 106, a multi-angle sampling module 107, an image calibration module 108, and a parameter adjustment module 109. The following describes functions of the modules.

The input module 101 is configured to obtain a multi-angle image of a target scene. The target scene includes one or more target objects. The target scene is, for example, a road traffic scene, an indoor scene, or an outdoor scene. The multi-angle image includes images obtained by observing the target object from a plurality of angles. The input module 101 is further configured to receive a three-dimensional twin model generated based on the multi-angle image of the target scene or a three-dimensional twin model generated based on a point cloud.

The object segmentation and semantic feature extraction module 102 is configured to perform segmentation on the multi-angle image of the target scene, and perform semantic feature extraction based on a segmented multi-angle image, to obtain a semantic feature of the one or more target objects in the target scene. Alternatively, the object segmentation and semantic feature extraction module 102 is configured to perform segmentation on the three-dimensional twin model in the target scene, to obtain a segmented three-dimensional model, and perform semantic feature extraction based on the segmented three-dimensional model, to obtain the semantic feature of the one or more target objects in the target scene.

The object editing module 103 is configured to edit a three-dimensional model of the target object, add physical semantics of the three-dimensional model of the target object, and store an edited three-dimensional model of the target object in the model library 104.

The model library 104 is a three-dimensional model asset knowledge base carrying physical semantics, is also referred to as a rich object knowledge base, and is configured to store a three-dimensional model carrying physical semantics. The three-dimensional model in the model library 104 carries a physical parameter of a corresponding real object, where the physical parameter includes mass, friction coefficient, material, hardness, elasticity coefficient, viscosity coefficient, and shape.

The simulation space generation and trial-and-error module 105 is configured to provide simulation space for generating the three-dimensional twin model, and perform parameter adjustment on the three-dimensional twin model based on the simulation space. Specifically, the simulation space generation and trial-and-error module 105 can perform matching with the three-dimensional model of the target object in the model library 104 based on the physical semantics of the target object, and establish the target scene in the simulation space by using the matched three-dimensional model, to obtain the three-dimensional twin model of the target scene.

The three-dimensional model output module 106 is configured to output the three-dimensional twin model of the target scene from the simulation space provided by the simulation space generation and trial-and-error module 105. The three-dimensional twin model output by the three-dimensional model output module 106 is a three-dimensional twin model of the target scene obtained by performing parameter adjustment and multi-angle calibration.

The multi-angle sampling module 107 is configured to obtain a multi-angle image of the three-dimensional twin model, and send the multi-angle image of the three-dimensional twin model to the image calibration module 108.

The image calibration module 108 is configured to obtain the multi-angle image of the target scene from the input module 101, obtain the multi-angle image of the three-dimensional twin model from the multi-angle sampling module 107, generate an adjustment parameter of the three-dimensional twin model based on a difference between the multi-angle image of the target scene and the multi-angle image of the three-dimensional twin model, and adjust the three-dimensional twin model of the target scene based on the adjustment parameter.

The parameter adjustment module 109 is configured to adjust a model parameter in the simulation space generation and trial-and-error module 105. The parameter adjustment module 109 is further configured to perform model correction on the three-dimensional twin model in the simulation space generation and trial-and-error module 105 based on the adjustment parameter generated by the image calibration module 108.

The three-dimensional twin system provided in embodiments of this application may be used in a three-dimensional twin scene in the fields of gaming, movies, surveying and mapping, positioning, navigation, robots, autonomous driving, virtual reality, augmented reality, industrial manufacturing, and the like. This is not specifically limited.

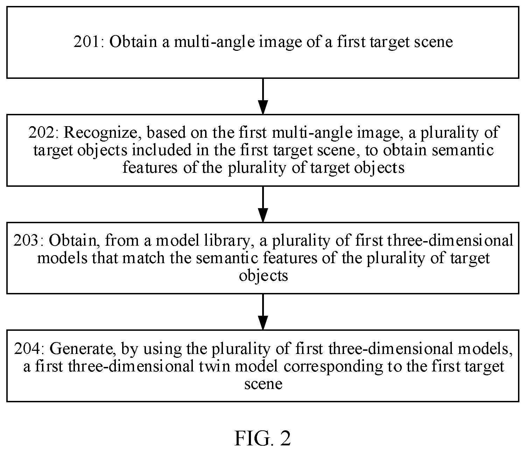

FIG. 2 is a schematic flowchart of a three-dimensional twinning method according to an embodiment of this application. As shown in FIG. 2, a three-dimensional twin model provided in this embodiment of this application includes the following steps.

201: Obtain a first multi-angle image of a first target scene.

A cloud server obtains the first multi-angle image of the first target scene, where the first target scene includes one or more target objects, and the first multi-angle image includes a plurality of images of the first target scene at a plurality of angles. Specifically, a user obtains the first multi-angle image of the first target scene captured by cameras at the plurality of angles, and uploads the multi-angle image of the first target scene to the cloud server. An input module 101 of the cloud server receives the first multi-angle image of the first target scene.

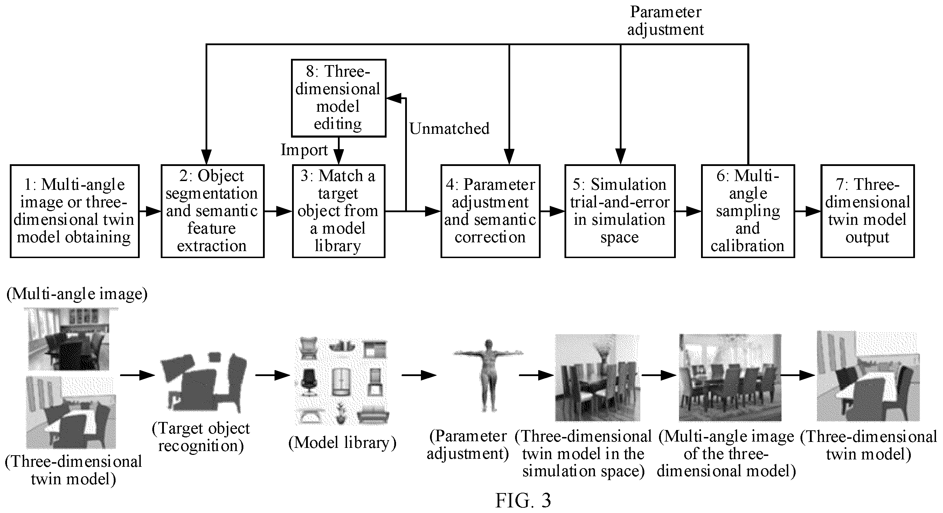

FIG. 3 is a schematic flowchart of another three-dimensional twinning according to an embodiment of this application. In step 1 of an example shown in FIG. 3, a cloud service obtains a multi-angle image of a first target scene, or a cloud server directly obtains a three-dimensional twin model generated based on a first multi-angle image.

In the example shown in FIG. 3, the first target scene is an indoor scene, and the first target scene includes a plurality of target objects. The target objects are, for example, a table and chairs in the indoor scene. In the example shown in FIG. 3, the target objects in the first target scene include one table and six chairs.

In this embodiment of this application, after the first multi-angle image of the first target scene is obtained, a second three-dimensional twin model of the first target scene may be established based on the first multi-angle image. That the cloud server establishes the second three-dimensional twin model may be conventional three-dimensional reconstruction based on visual geometry, or may be three-dimensional reconstruction based on deep learning. This is not specifically limited.

In a possible implementation, the cloud server may alternatively directly obtain a three-dimensional twin model that is of the first target scene and that is established based on a point cloud of the first target scene.

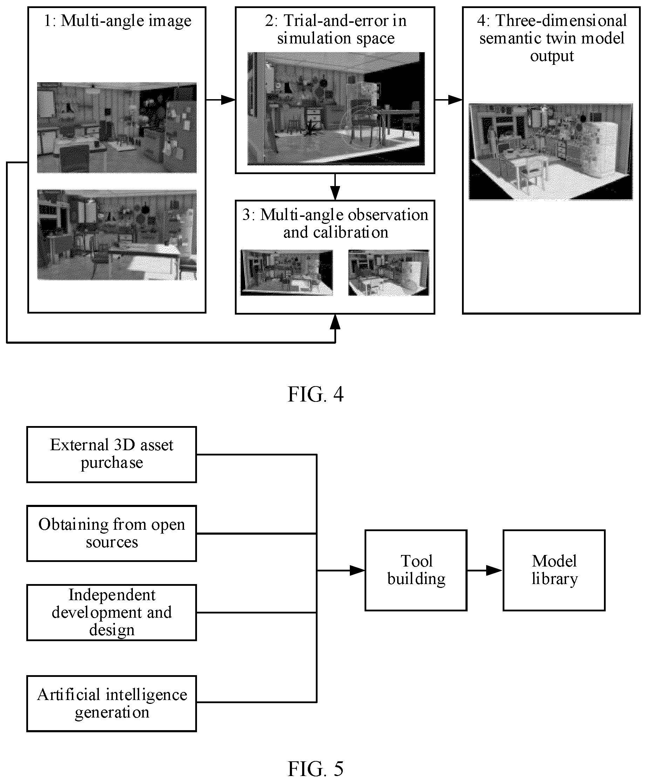

FIG. 4 is a schematic flowchart of another three-dimensional twinning method according to an embodiment of this application. In an example shown in FIG. 4, a user obtains, by using a lidar and a camera, a plurality of multi-angle images and point clouds of a target object or scene in a period of time, and inputs the multi-angle image or a model formed through three-dimensional reconstruction that is based on the multi-angle point cloud into a three-dimensional twin system. For example, in step 1 of the example shown in FIG. 4, the multi-angle image received by the three-dimensional twin system is a multi-angle image of an indoor scene, and the indoor scene includes a table, chairs, a refrigerator, a cabinet, and other target objects.

202: Recognize, based on the first multi-angle image, the plurality of target objects included in the first target scene, to obtain semantic features of the plurality of target objects.

The cloud server recognizes, based on the first multi-angle image of the first target scene, the plurality of target objects included in the first target scene, to obtain the semantic features of the plurality of target objects. Specifically, an object segmentation and semantic feature extraction module 102 of the cloud server recognizes the plurality of target objects based on the multi-angle image of the first target scene, to obtain the semantic features of the plurality of target objects. The semantic feature of the target object is used to describe a feature of the target object. The cloud server can recognize the target object based on the semantic feature of the target object. For example, the cloud server can recognize, based on the semantic feature of the target object, that the target object is a chair.

In a possible implementation, in a process in which the cloud server recognizes, based on the first multi-angle image of the first target scene, the plurality of target objects included in the first target scene, the cloud server performs segmentation on the multi-angle image of the first target scene, to obtain a plurality of images obtained through segmentation, and the cloud server obtains, through recognition, the target object based on the images obtained through segmentation

Specifically, the object segmentation and semantic feature extraction module 102 of the cloud server recognizes the target object in the first multi-angle image, and performs segmentation on the first multi-angle image of the first target scene based on the target object, to obtain a segmented multi-angle image. The segmented multi-angle image is a multi-angle image of the target object. The cloud server recognizes the target object based on the segmented multi-angle image, and performs feature extraction on the multi-angle image of the target object, to obtain the semantic feature of the target object. It should be noted that, for a two-dimensional multi-angle image, the semantic feature of the target object extracted by the cloud server is a feature pixel, and the cloud server recognizes the target object based on the feature pixel.

In a possible implementation, in a process in which the cloud server recognizes, based on the first multi-angle image of the first target scene, the plurality of target objects included in the first target scene, the cloud server generates a third three-dimensional twin model of the first target scene based on the first multi-angle image of the first target scene, and performs segmentation on the third three-dimensional twin model, to obtain three-dimensional models of the plurality of target objects. The cloud server extracts the semantic feature of the target object based on the three-dimensional model of the target object.

Specifically, the object segmentation and semantic feature extraction module 102 of the cloud server recognizes a three-dimensional model of the target object in the first target scene, and performs segmentation on the third three-dimensional twin model of the first target scene based on the three-dimensional model of the target object, to obtain a segmented three-dimensional model. The segmented three-dimensional model is the three-dimensional model of the target object. The cloud server recognizes the target object based on the segmented three-dimensional model, and performs feature extraction on the three-dimensional model of the target object, to obtain the semantic feature of the target object. It should be noted that, for the three-dimensional model, the semantic feature of the target object extracted by the cloud server is a feature point in the point cloud, and the cloud server recognizes the target object based on the feature point.

Still refer to FIG. 3. In step 2 of the example shown in FIG. 3, the cloud server performs image segmentation and semantic feature extraction on the first multi-angle image, to obtain semantic features of the target objects; or the cloud server performs model segmentation and semantic feature extraction on a third three-dimensional twin model generated based on the first multi-angle image, to obtain semantic features of the target objects. For example, in the example shown in FIG. 3, the semantic features of the target objects obtained by the cloud server through recognition based on the multi-angle image of the first target scene includes a semantic feature of one table and semantic features of eight chairs.

In a possible implementation, the cloud server may alternatively perform segmentation and semantic feature extraction on the three-dimensional twin model that is of the first target scene and that is established based on the point cloud, to obtain the semantic feature of the target object.

Still refer to FIG. 4. In the example shown in FIG. 4, after receiving the three-dimensional twin model that is of the target scene and that is generated based on the point cloud, the three-dimensional twin system uses a three-dimensional point cloud instance segmentation technology, for example, 3D-BoNet, to obtain target objects in the three-dimensional reconstruction model through segmentation, and performs semantic feature extraction on the target objects, where the target objects are the table, the chairs, the refrigerator, the cabinet, and the like.

203: Obtain, from a model library, a plurality of first three-dimensional models that match the semantic features of the plurality of target objects, where the plurality of first three-dimensional models carry physical parameters of the plurality of target objects.

The cloud server obtains, from the model library, the plurality of first three-dimensional models that match the semantic features of the plurality of target objects, where the plurality of first three-dimensional models carry the physical parameters of the plurality of target objects. Specifically, a simulation space generation and trial-and-error module 105 of the cloud server obtains three-dimensional models from a model library 104, and performs matching between the three-dimensional models and the semantic features of the target objects based on a similarity matching algorithm, to determine the plurality of first three-dimensional models that match the semantic features of the target objects, where the plurality of first three-dimensional models in the model library 104 carry the physical parameters of the plurality of target objects.

The physical parameter in this embodiment of this application includes one or more of the following parameters: a simulation type, mass, friction coefficient, material, hardness, elastic coefficient, viscosity coefficient, and shape. The simulation type includes: a rigid body, a soft body, and a fluid.

Still refer to FIG. 3. In step 3 of the example shown in FIG. 3, the cloud service performs matching of the semantic features of the target objects in the model library, to obtain first three-dimensional models of the target objects. For example, the target objects obtained by the cloud server through recognition based on the multi-angle image of the first target scene include one table and eight chairs. The cloud server performs matching in the model library based on the semantic features of the one table and the eight chairs, to determine a plurality of first three-dimensional models corresponding to the one table and the eight chairs.

In a possible implementation, when the target object does not match a three-dimensional model in the model library, the cloud server generates a second three-dimensional model based on the target object, and stores the second three-dimensional model in the model library. Specifically, the cloud server generates the second three-dimensional model based on the target object, adds the physical parameter to the second three-dimensional model, and stores, in the model library, a second three-dimensional model obtained by adding the physical parameter.

Still refer to FIG. 3. In step 8 of the example shown in FIG. 3, when the cloud service performs matching of the target object in a model library, if there is no three-dimensional model that matches the target object in the model library, the cloud server generates a second three-dimensional model based on the target object, adds a physical parameter of the target object to the second three-dimensional model, and stores, in the model library, a second three-dimensional model obtained by adding the physical parameter.

For example, if the target object is a rectangular table, and there is no matched rectangular table model in the model library, the cloud server generates a rectangular table model based on a semantic feature of the target object, adds physical parameters such as size, material, and mass to the rectangular table model, and stores, in the model library, a rectangular table model obtained by adding the physical parameters.

Still refer to FIG. 4. In the example shown in FIG. 4, after obtaining the target object in the three-dimensional reconstruction model through segmentation, the cloud server performs similarity matching with a three-dimensional model in a model library based on a semantic feature of the segmented target object, to obtain, through matching, a three-dimensional model including physical semantics. For example, a table model carrying physical semantics is matched from the model library based on a three-dimensional model of a table. The physical semantics of the table model is: a rigid body, a material being wood, mass being 10 kg, and a friction coefficient being 0.1.

In the example shown in FIG. 4, if the cloud server performs similarity matching with the three-dimensional model in the model library based on the semantic feature of the segmented target object, but no three-dimensional model including the physical semantics is obtained through matching, the cloud server performs editing based on the three-dimensional model of the segmented target object, adds the physical parameter to generate a three-dimensional model including the physical semantics, and stores the three-dimensional model in the model library.

In this embodiment of this application, the cloud server may establish the model library in a plurality of manners. Specifically, the cloud server may obtain an original three-dimensional model through external 3D asset purchase, obtain an original three-dimensional model from open sources, obtain an original three-dimensional model through self-development and design, or obtain an original three-dimensional model through artificial intelligence generation, and create a physical parameter of the original three-dimensional model based on a tool, to obtain the model library. The physical parameter of the three-dimensional model includes a simulation type, a shape, mass, a material, a friction coefficient, an elastic coefficient, and a viscosity coefficient of an object. The simulation type includes rigid body, soft body, fluid, cloth, and hair.

FIG. 5 is a diagram of creating a model library by a cloud server according to an embodiment of this application. In an example shown in FIG. 5, the cloud server may obtain an original three-dimensional model through external 3D asset purchase, obtain an original three-dimensional model from open sources, obtain an original three-dimensional model through self-development and design, or obtain an original three-dimensional model through artificial intelligence generation, and create a physical parameter of the original three-dimensional model based on a tool, to obtain the model library.

204: Generate, by using the plurality of first three-dimensional models, a first three-dimensional twin model corresponding to the first target scene.

The cloud server generates, by using the plurality of first three-dimensional models, the first three-dimensional twin model corresponding to the first target scene. Specifically, the simulation space generation and trial-and-error module 105 of the cloud server imports the matched first three-dimensional models of the plurality of target objects in the model library 104 into simulation space, to obtain, through combination, the first three-dimensional twin model corresponding to the first target scene in the simulation space.

Still refer to FIG. 3. In steps 4 and 5 of the example shown in FIG. 3, the cloud server imports the matched first three-dimensional models in the model library into simulation space to perform simulation trial-and-error. For example, the cloud server obtains, from the model library through matching, the three-dimensional models of the one table and the eight chairs, and the cloud server imports the three-dimensional models of the one table and the eight chairs into the simulation space, and performs combination based on the first target scene, to obtain a first three-dimensional twin model corresponding to the first target scene.

In a possible implementation, after determining, from the model library, the three-dimensional model that matches the semantic feature of the target object, the cloud server may perform parameter adjustment on the three-dimensional model, so that the three-dimensional model better matches the three-dimensional model of the target object.

Still refer to FIG. 4. In step 3 of the example shown in FIG. 4, after the three-dimensional model in the model library is successfully obtained through matching, the cloud server performs parameter adjustment on the three-dimensional model, so that the three-dimensional model better matches the three-dimensional model of the target object, and rearranges, in simulation space, a three-dimensional model obtained by performing parameter adjustment, so that the three-dimensional model obtained by performing parameter adjustment matches the target scene, and a twin model of the target scene is generated. For example, the target object is a chair, and there is a deviation between a size of a chair model obtained by performing matching by the cloud server from the model library and a size of the target object. The cloud server performs parameter adjustment on the chair matched from the model library, so that the chair in the model library better matches the target object.

In a possible implementation, the cloud server obtains a second multi-angle image of the first three-dimensional twin model, and adjusts, based on a difference between the first multi-angle image and the second multi-angle image, the first three-dimensional twin model corresponding to the first target scene. When the difference between the first multi-angle image and the second multi-angle image is less than an error threshold, the cloud server outputs the first three-dimensional twin model corresponding to the first target scene. When the difference between the first multi-angle image and the second multi-angle image is greater than an error threshold, the cloud server adjusts a parameter of the first three-dimensional model of the target object obtained from the model library and a parameter of the first three-dimensional twin model, or the cloud server re-performs segmentation, feature extraction, and model library matching based on the multi-angle image of the first target scene.

Still refer to FIG. 3. In steps 6 and 7 of the example shown in FIG. 3, the cloud server obtains a second multi-angle image of the first three-dimensional twin model, and adjusts the first three-dimensional twin model based on a difference between the first multi-angle image and the second multi-angle image. For example, the cloud server obtains the second angle image of the first target scene corresponding to the one table and the eight chairs, and calibrates the first three-dimensional twin model based on the difference between the first multi-angle image and the second multi-angle image. When the difference between the first target scene and the second target scene is less than a preset threshold, the cloud server outputs the first three-dimensional twin model corresponding to the first target scene.

In the example shown in FIG. 3, in a process in which the cloud server calibrates the first three-dimensional twin model based on the difference between the first multi-angle image and the second multi-angle image, after the cloud server adjusts a parameter of the first three-dimensional twin model, the difference between the first multi-angle image and the second multi-angle image is still greater than the error threshold. In this case, the cloud server re-performs target object recognition and three-dimensional model matching in the model library based on the first multi-angle image of the first target scene, and regenerates a first three-dimensional twin model of the first target scene based on a re-matched three-dimensional model.

Still refer to FIG. 4. In step 3 and step 4 of the example shown in FIG. 4, the cloud server obtains a multi-angle image of the three-dimensional twin model of the target scene, compare the multi-angle image of the three-dimensional twin model of the target scene with a multi-angle image of the target scene captured by a camera, and calibrates the three-dimensional twin model in the simulation space. For example, the cloud server may adjust an observation angle of a three-dimensional space camera, perform photographing and sampling for a plurality of times to generate a plurality of groups of multi-angle images of the indoor scene, and calculate an difference based on the multi-angle images of the indoor scene model and the multi-angle image of the real indoor scene. If the difference is greater than an error threshold, the cloud server re-performs segmentation, feature extraction, model library matching, and parameter adjustment on the multi-angle image of the target scene. If the difference between the two groups of multi-angle images is less than an error threshold, the cloud server outputs the three-dimensional twin model of the indoor scene.

In this embodiment of this application, the cloud server can obtain the second multi-angle image of the first three-dimensional twin model, and perform difference comparison between the second multi-angle image of the first three-dimensional twin model and the multi-angle image of the first target scene based on the second multi-angle image of the first three-dimensional twin model, to correct the first three-dimensional twin model. In this way, modeling accuracy of the first three-dimensional twin model is improved.

In a possible implementation, the cloud server adjusts a model parameter of the first three-dimensional twin model based on the second target scene, to obtain a second three-dimensional twin model corresponding to the second target scene, where the second target scene includes the plurality of target objects, and the second target scene and the first target scene are different.

For example, the first target scene is a black car on an asphalt road surface, the cloud server generates the three-dimensional twin model of the first target scene, and the cloud server may modify the model parameter of the three-dimensional twin model of the first target scene, to obtain the three-dimensional twin model of the second target scene, where the second target scene is a black car on a gravel road surface. For another example, the cloud server may further generate, based on a requirement of an autonomous driving scenario, simulation environments of different ambient light, such as daytime and night, and simulation environments of different ground types, such as a normal asphalt road, a road surface covered with rain and snow, and a gravel road surface. The cloud server may further quickly generate a plurality of simulation environments by adjusting an ambient light intensity parameter and a ground friction coefficient.

In this embodiment of this application, the cloud server can perform model parameter adjustment on the modeled three-dimensional twin model of the first target scene, to obtain the three-dimensional twin model of the second target scene without remodeling. In this way, modeling efficiency of the three-dimensional twin model of the similar scene is improved.

It can be learned from the foregoing embodiment that, in this embodiment of this application, the cloud server can obtain, through matching, the three-dimensional models of the plurality of target objects from the model library based on the multi-angle image of the scene, and generate the three-dimensional twin model of the target scene by using the matched three-dimensional model in the model library. The three-dimensional model in the model library carries the physical parameter, and the three-dimensional twin model generated based on the three-dimensional model in the model library carries the physical semantics of the target scene. In this way, a modeling effect of the three-dimensional twin model is improved.

The foregoing describes the three-dimensional twinning method provided in embodiments of this application. The following describes an apparatus provided in embodiments of this application with reference to the accompanying drawings.

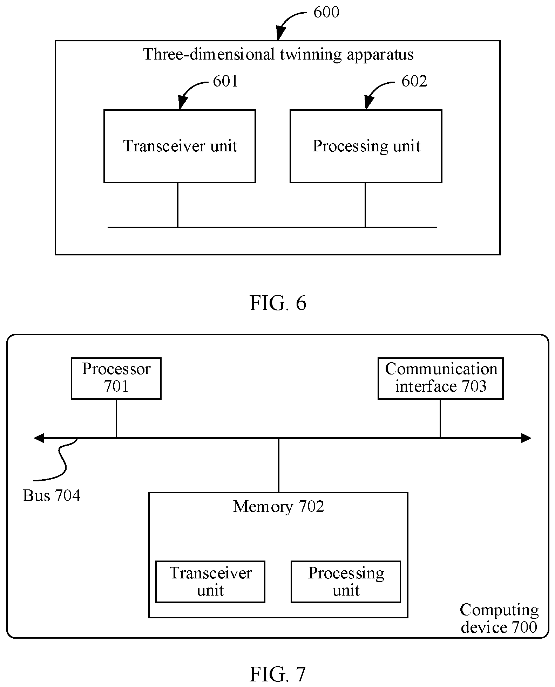

FIG. 6 is a diagram of a structure of a three-dimensional twinning apparatus according to an embodiment of this application. In an example shown in FIG. 6, the three-dimensional twinning apparatus is configured to implement the steps performed by the cloud server in the foregoing embodiments. The three-dimensional twinning apparatus 600 includes a transceiver unit 601 and a processing unit 602.

The transceiver unit 601 is configured to obtain a first multi-angle image of a first target scene. The processing unit 602 is configured to recognize, based on the first multi-angle image, a plurality of target objects included in the first target scene, to obtain semantic features of the plurality of target objects. The processing unit 602 is further configured to obtain, from a model library, a plurality of first three-dimensional models that match the semantic features of the plurality of target objects, where the plurality of first three-dimensional models carry physical parameters of the plurality of target objects. The processing unit 602 is further configured to generate, by using the plurality of first three-dimensional models, a first three-dimensional twin model corresponding to the first target scene.

In a possible implementation, the processing unit 602 is further configured to: obtain a second multi-angle image of the first three-dimensional twin model; and adjust, based on a difference between the first multi-angle image and the second multi-angle image, the first three-dimensional twin model corresponding to the first target scene.

In a possible implementation, the processing unit 602 is further configured to adjust a model parameter of the first three-dimensional twin model based on a second target scene, to obtain a second three-dimensional twin model corresponding to the second target scene, where the second target scene includes the plurality of target objects, and the second target scene and the first target scene have different environments.

In a possible implementation, the processing unit 602 is specifically configured to: perform segmentation based on the first multi-angle image, to obtain a plurality of images obtained through segmentation; and recognize the plurality of images obtained through segmentation, and determine the plurality of target objects.

In a possible implementation, the processing unit 602 is specifically configured to: generate a third three-dimensional twin model based on the first multi-angle image; and perform segmentation on the third three-dimensional twin model, to obtain the plurality of target objects.

In a possible implementation, the processing unit 602 is further configured to: when the target object does not match a three-dimensional model in the model library, generate a second three-dimensional model based on the target object; and store the second three-dimensional model in the model library.

In a possible implementation, the physical parameter includes one or more of the following: mass, friction coefficient, material, hardness, elastic coefficient, viscosity coefficient, and shape.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, the steps in the foregoing methods or the foregoing units may be implemented by using a hardware integrated logic circuit in a processor element, or may be implemented in a form of software invoked by a processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all preferred embodiments, and related actions are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all preferred embodiments, and related actions are not necessarily required in the present invention or this application.

FIG. 7 is a diagram of a structure of a computing device according to an embodiment of this application. As shown in FIG. 7, the computing device 700 includes: a processor 701, a memory 702, a communication interface 703, and a bus 704. The processor 701, the memory 702, and the communication interface 703 are coupled through a bus (not marked in the figure). The memory 702 stores instructions. When execution instructions in the memory 702 are executed, the computing device 700 performs the methods performed by the cloud server in the foregoing method embodiments.

The computing device 700 may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the units in the apparatus may be implemented in a form of scheduling a program by a processing element, the processing element may be a general-purpose processor, for example, a central processing unit (central processing unit, CPU) or another processor that may invoke the program. For still another example, the units may be integrated together and implemented in a form of a system-on-a-chip (system-on-a-chip, SoC).

The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 702 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, but not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 702 stores executable program code, and the processor 701 executes the executable program code to separately implement functions of a transceiver module, an adaptation module, and a transcoding module, to implement the foregoing three-dimensional twinning methods. That is, the memory 702 stores instructions used to perform the foregoing three-dimensional twinning methods.

The communication interface 703 uses a transceiver module, for example, but not limited to, a network interface card or a transceiver, to implement communication between the computing device 700 and another device or a communication network.

In addition to a data bus, the bus 704 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. Buses may be classified into an address bus, a data bus, a control bus, and the like.

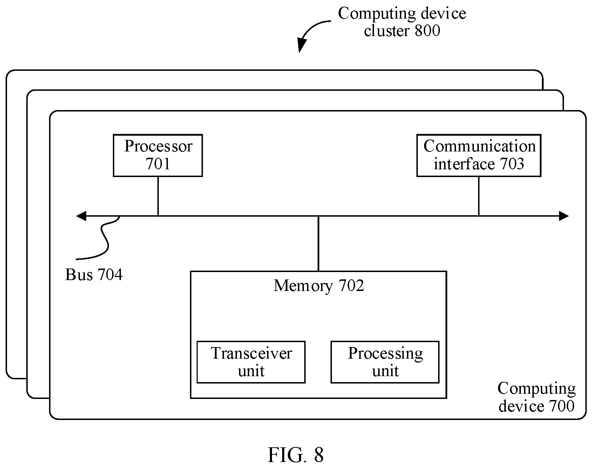

FIG. 8 is a diagram of a computing device cluster according to an embodiment of this application. As shown in FIG. 8, the computing device cluster 800 includes at least one computing device 700.

As shown in FIG. 8, the computing device cluster 800 includes at least one computing device 700. A memory 702 in one or more computing devices 700 in the computing device cluster 800 may store same instructions used to perform the foregoing three-dimensional twinning methods.

In some possible implementations, a memory 702 in one or more computing devices 700 in the computing device cluster 800 may alternatively separately store some instructions used to perform the foregoing three-dimensional twinning methods. In other words, a combination of the one or more computing devices 700 may jointly execute the instructions used to perform the foregoing three-dimensional twinning methods.

It should be noted that memories 702 in different computing devices 700 in the computing device cluster 800 may store different instructions, which are respectively used to perform some functions of the foregoing three-dimensional twinning apparatus. In other words, the instructions stored in the memories 702 in different computing devices 700 may be used to implement functions of one or more modules in a transceiver unit and a processing unit.

In some possible implementations, the one or more computing devices 700 in the computing device cluster 800 may be connected through a network. The network may be a wide area network, a local area network, or the like.

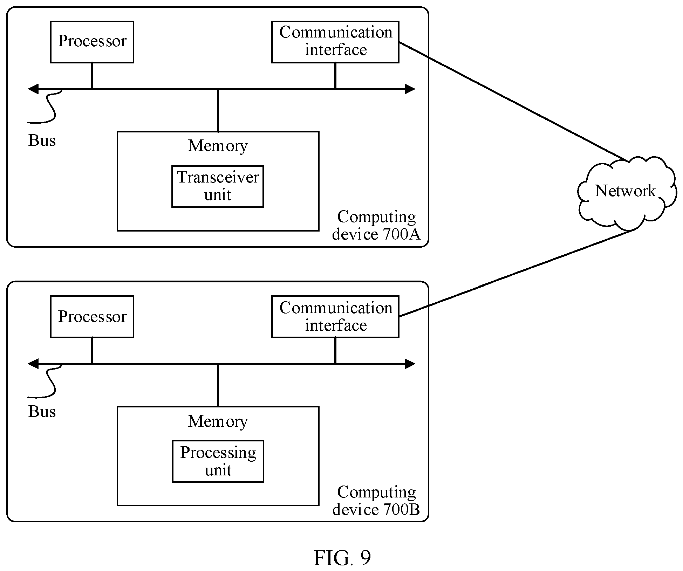

FIG. 9 is a diagram in which computer devices in a computer cluster are connected through a network according to an embodiment of this application. As shown in FIG. 9, two computing devices 700A and 700B are connected through the network. Specifically, each computing device is connected to the network through a communication interface of the computing device.

In a possible implementation, a memory in the computing device 700A stores instructions for performing a function of a transceiver module. In addition, a memory in the computing device 700B stores instructions for performing a function of a processing module.

It should be understood that functions of the computing device 700A shown in FIG. 9 may alternatively be completed by a plurality of computing devices 700. Similarly, functions of the computing device 700B may alternatively be completed by a plurality of computing devices.

In another embodiment of this application, a computer-readable storage medium is further provided. The computer-readable storage medium stores computer-executable instructions. When a processor of a device executes the computer-executable instructions, the device performs the methods performed by the cloud server in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the methods performed by the cloud server in the foregoing method embodiments.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A three-dimensional twinning method, applied to a cloud platform and comprising:
Obtaining a first multi-angle image of a first target scene;
Recognizing, based on the first multi-angle image, a plurality of target objects comprised in the first target scene, to obtain semantic features of the plurality of target objects;
Obtaining, from a model library, a plurality of first three-dimensional models that match the semantic features of the plurality of target objects, wherein the plurality of first three-dimensional models carry physical parameters of the plurality of target objects; and
Generating, by using the plurality of first three-dimensional models, a first three-dimensional twin model corresponding to the first target scene.

2. The method according to claim 1, wherein the method further comprises:
obtaining a second multi-angle image of the first three-dimensional twin model; and
adjusting, based on a difference between the first multi-angle image and the second multi-angle image, the first three-dimensional twin model corresponding to the first target scene.

3. The method according to claim 1 or 2, wherein the method further comprises:
adjusting a model parameter of the first three-dimensional twin model based on a second target scene, to obtain a second three-dimensional twin model corresponding to the second target scene, wherein the second target scene comprises the plurality of target objects, and the second target scene and the first target scene have different environments.

4. The method according to any one of claims 1 to 3, wherein the recognizing, based on the first multi-angle image, a plurality of target objects comprised in the first target scene comprises:
performing segmentation based on the first multi-angle image, to obtain a plurality of images obtained through segmentation; and
recognizing the plurality of images obtained through segmentation, and determining the plurality of target objects.

5. The method according to any one of claims 1 to 3, wherein the recognizing, based on the first multi-angle image, a plurality of target objects comprised in the first target scene comprises:
generating a third three-dimensional twin model based on the first multi-angle image; and
performing segmentation on the third three-dimensional twin model, to obtain the plurality of target objects.

6. The method according to any one of claims 1 to 5, wherein the method further comprises:
when the target object does not match a three-dimensional model in the model library, generating a second three-dimensional model based on the target object; and
storing the second three-dimensional model in the model library.

7. The method according to any one of claims 1 to 6, wherein the physical parameter comprises one or more of the following:
mass, friction coefficient, material, hardness, elastic coefficient, viscosity coefficient, and shape.

8. A three-dimensional twinning apparatus, comprising:
a transceiver unit, configured to obtain a first multi-angle image of a first target scene; and
a processing unit, configured to recognize, based on the first multi-angle image, a plurality of target objects comprised in the first target scene, to obtain semantic features of the plurality of target objects, wherein
the processing unit is further configured to obtain, from a model library, a plurality of first three-dimensional models that match the semantic features of the plurality of target objects, wherein the plurality of first three-dimensional models carry physical parameters of the plurality of target objects; and
the processing unit is further configured to generate, by using the plurality of first three-dimensional models, a first three-dimensional twin model corresponding to the first target scene.

9. The apparatus according to claim 8, wherein the processing unit is further configured to:
obtain a second multi-angle image of the first three-dimensional twin model; and
adjust, based on a difference between the first multi-angle image and the second multi-angle image, the first three-dimensional twin model corresponding to the first target scene.

10. The apparatus according to claim 8 or 9, wherein the processing unit is further configured to:
adjust a model parameter of the first three-dimensional twin model based on a second target scene, to obtain a second three-dimensional twin model corresponding to the second target scene, wherein the second target scene comprises the plurality of target objects, and the second target scene and the first target scene have different environments.

11. The apparatus according to any one of claims 8 to 10, wherein the processing unit is specifically configured to:
perform segmentation based on the first multi-angle image, to obtain a plurality of images obtained through segmentation; and
recognize the plurality of images obtained through segmentation, and determine the plurality of target objects.

12. The apparatus according to any one of claims 8 to 10, wherein the processing unit is specifically configured to:
generate a third three-dimensional twin model based on the first multi-angle image; and
perform segmentation on the third three-dimensional twin model, to obtain the plurality of target objects.

13. The apparatus according to any one of claims 8 to 12, wherein the processing unit is further configured to:
when the target object does not match a three-dimensional model in the model library, generate a second three-dimensional model based on the target object; and
store the second three-dimensional model in the model library.

14. The apparatus according to any one of claims 8 to 13, wherein the physical parameter comprises one or more of the following:
mass, friction coefficient, material, hardness, elastic coefficient, viscosity coefficient, and shape.

15. A computing device cluster, comprising one or more computing devices, wherein the computing device comprises a processor, the processor is coupled to a memory, the processor is configured to store instructions, and when the instructions are executed by the processor, the computing device cluster is caused to perform the method according to any one of claims 1 to 7.

16. A computer-readable storage medium, wherein the computer-readable storage medium stores instructions, and when the instructions are executed, a computer is caused to perform the method according to any one of claims 1 to 7.

17. A computer program product, wherein the computer program product comprises instructions, and when the instructions are executed, a computer is caused to implement the method according to any one of claims 1 to 7.
